# EUROPEAN PATENT APPLICATION

(11) **EP 4 813 762 A1**
(43) Date of publication of application: **30.09.2026**
(21) Application number: 26163210.3
(22) Date of filing: 09.03.2026
(51) Int. Cl.: B60R 21/2338

(54) **AIRBAG DEVICE**

(30) Priority: 12.03.2025 CN 202520437339 U
(71) Applicant: Yanfeng International Automotive Technology Co., Ltd., Shanghai 201306 (CN)
(72) Inventor: CHEN, Shuo, Shanghai, 201306 (CN); DU, Chunhu, Shanghai, 201306 (CN); MEI, Chenyi, Shanghai, 201306 (CN); JIANG, Donghao, Shanghai, 201306 (CN)
(74) Representative: Specht, Peter

(57) **Abstract**

The present disclosure provides an airbag device, relating to the technical field of automotive passive safety devices. The airbag device comprises an airbag and a restraining member connected to the airbag, wherein the airbag has an initial state, an intermediate state, and a deployed state during the inflation process; wherein the restraining member is configured to restrain at least a portion of the airbag during the transition of the airbag from the initial state to the intermediate state, and to release the restraint on the airbag during the transition of the airbag from the intermediate state to the deployed state, thereby allowing the restrained portion of the airbag to deploy. This airbag device can control the deployment sequence of the airbag, thereby enhancing the protective performance of the airbag.

## Description

### Technical Field

The present disclosure relates to the technical field of automotive passive safety devices, and more particularly, to an airbag device.

### Background of Invention

Airbag devices are generally installed inside the instrument panel of a vehicle. After deployment, the airbag must fully expand to prevent the occupant's head from colliding with the instrument panel, thereby protecting the occupant. The deployment sequence of the airbag affects the contact positions between the expanded airbag and the occupant, windshield, etc., which directly determines the quality of the airbag's protective performance.

Existing airbag devices do not control the deployment sequence of the airbag, which may cause the airbag to impact the occupant, windshield, etc., during deployment, thus failing to ensure the protective performance of the airbag.

### Summary of Invention

The objectives of the present disclosure include, for example, providing an airbag device capable of controlling the deployment sequence of the airbag, thereby enhancing the protective performance of the airbag.

Embodiments of the present disclosure may be implemented as follows:
An embodiment of the present disclosure provides an airbag device comprising an airbag and a restraining member connected to the airbag, wherein the airbag has an initial state, an intermediate state, and a deployed state during the inflation process; wherein the restraining member is configured to restrain at least a portion of the airbag during the transition of the airbag from the initial state to the intermediate state, and to release the restraint on the airbag during the transition of the airbag from the intermediate state to the deployed state, thereby allowing the restrained portion of the airbag to deploy.

Optionally, when the airbag is in the initial state, the restraining member is provided with a connecting end connected to the airbag, wherein the connecting end is capable of disconnecting from the airbag during the transition of the airbag from the intermediate state to the deployed state, thereby releasing the restraint on the airbag.

Optionally, the connecting end comprises a first connecting end and a second connecting end, the first connecting end and the second connecting end being respectively the two ends of the restraining member in its extending direction; wherein both the first connecting end and the second connecting end are connected to the airbag, and at least one of the first connecting end and the second connecting end is capable of disconnecting from the airbag during the transition of the airbag from the intermediate state to the deployed state.

Optionally, the airbag comprises a main body portion and a folded portion connected to each other, wherein the folded portion is folded relative to the main body portion when the airbag is in the initial state; wherein the first connecting end and the second connecting end are respectively connected to the main body portion and the folded portion; wherein the first connecting end is capable of disconnecting from the main body portion during the transition of the airbag from the intermediate state to the deployed state, and/or the second connecting end is capable of disconnecting from the folded portion during the transition of the airbag from the intermediate state to the deployed state.

Optionally, the airbag device further comprises a gas generator, the gas generator being arranged on the main body portion; wherein a first connection position and a second connection position are provided on the main body portion, the first connection position being closer to the gas generator than the second connection position; wherein the first connecting end is connected to the first connection position or the second connection position.

Optionally, a retaining ring is arranged inside the main body portion, the gas generator being fixed to the retaining ring; wherein a stud is provided on the retaining ring, wherein part of the stud extends outwardly beyond the main body portion; wherein the first connecting end is hooked onto the stud, wherein the first connection position is the position where the stud is located.

Optionally, the number of the restraining members is plural; wherein the first connecting end of each restraining member is connected to the main body portion, wherein the second connecting end on each restraining member is connected to the folded portion.

Optionally, the airbag comprises a main body portion and a folded portion, the folded portion being folded relative to the main body portion when the airbag is in the initial state; wherein both the first connecting end and the second connecting end are connected to the main body portion; wherein both the first connecting end and the second connecting end are capable of disconnecting from the main body portion during the transition of the airbag from the intermediate state to the deployed state.

Optionally, the airbag device further comprises a gas generator, the gas generator being arranged on the main body portion; wherein a third connection position and a fourth connection position are provided on the main body portion, the third connection position and the fourth connection position being located on opposite sides of the gas generator; wherein the first connecting end and the second connecting end are respectively connected to the third connection position and the fourth connection position.

Optionally, the restraining member comprises a plurality of restraining segments connected sequentially; wherein the end portions of the two restraining segments at both ends are respectively the first connecting end and the second connecting end; wherein during the transition of the airbag from the intermediate state to the deployed state, at least one of the first connecting end and the second connecting end is capable of disconnecting from the airbag, and the two adjacent restraining segments are capable of disconnecting from each other.

Optionally, a weakened structure is provided on the restraining member; wherein during the transition of the airbag from the intermediate state to the deployed state, the restraining member is capable of breaking at the weakened structure to release the restraint on the airbag.

Optionally, a plurality of through holes spaced apart are formed on the restraining member to form the weakened structure; or, a portion of the restraining member is thinned to form the weakened structure.

The beneficial effects of the airbag device provided by the embodiments of the present disclosure include, for example: To control the deployment sequence of the airbag, an airbag device is designed, which includes an airbag and a restraining member connected to the airbag, wherein the airbag has an initial state, an intermediate state, and a deployed state during the inflation process; wherein the restraining member is configured to restrain at least a portion of the airbag during the transition of the airbag from the initial state to the intermediate state, and to release the restraint on the airbag during the transition of the airbag from the intermediate state to the deployed state, thereby allowing the restrained portion of the airbag to deploy normally.

During the transition of the airbag from the initial state to the intermediate state, at least a portion of the airbag is restrained by the restraining member, while the remaining portion of the airbag deploys normally. During the transition of the airbag from the intermediate state to the deployed state, the restraining member releases the restraint on the airbag, at which point the airbag is able to fully deploy. By providing the restraining member, the deployment sequence of the airbag is controlled, the impact during the deployment process is reduced, and thus the protective performance of the airbag is enhanced.

### Brief Description of Drawings

To more clearly illustrate the technical solutions of the embodiments of the present disclosure, a brief introduction of the drawings used in the embodiments will be given below. It should be understood that the following drawings show only certain embodiments of the present disclosure and therefore should not be construed as limiting the scope. For those of ordinary skill in the art, other related drawings may be obtained based on these drawings without inventive effort.
Figure 1 shows a first cross-sectional view of the airbag device when the airbag is in the initial state;
Figure 2 shows a second cross-sectional view of the airbag device when the airbag is in the initial state;
Figure 3 shows a first cross-sectional view of the airbag device when the airbag is in the intermediate state;
Figure 4 shows a first schematic view of the airbag device when the airbag is in the intermediate state;
Figure 5 shows a schematic view of a first type of restraining member;
Figure 6 shows a schematic view of a second type of restraining member;
Figure 7 shows a second cross-sectional view of the airbag device when the airbag is in the intermediate state;
Figure 8 shows a third cross-sectional view of the airbag device when the airbag transitions from the intermediate state to the deployed state;
Figure 9 shows a third cross-sectional view of the airbag device when the airbag is in the initial state;
Figure 10 shows a second schematic view of the airbag device when the airbag is in the intermediate state;
Figure 11 shows a schematic view of the airbag in the first type of airbag device when the airbag is constrained;
Figure 12 shows a schematic view of the airbag in the first type of airbag device when the constraint on the airbag is released;
Figure 13 shows a schematic view of the airbag in the first type of airbag device when the airbag is in a deployed state;
Figure 14 shows a schematic view of the airbag in the second type of airbag device when the airbag is constrained;
Figure 15 shows a schematic view of the airbag in the second type of airbag device when the constraint on the airbag is released;
Figure 16 shows a schematic view of the airbag in the second type of airbag device when the airbag is in a deployed state.

Reference numerals: 100-airbag; 110-main body portion; 111-first connection position; 112-second connection position; 113-third connection position; 114-fourth connection position; 120-folded portion; 200-restraining member; 210-first connecting end; 220-second connecting end; 230-first restraining segment; 240-second restraining segment; 250-hanging hole; 260-weakened structure; 300-housing; 400-gas generator; 500-retaining ring; 510-stud; 600-windshield.

### Detailed Description of Drawings

In order to make the objectives, technical solutions, and advantages of the embodiments of the present disclosure clearer, the following description will combine the accompanying drawings of the embodiments of the present disclosure to provide a clear and complete description of the technical solutions thereof. It is apparent that the described embodiments are only a part, not all, of the embodiments of the present disclosure. The components of the embodiments of the present disclosure described and illustrated herein may be arranged and designed in various different configurations.

Therefore, the detailed description of the embodiments of the present disclosure provided in the accompanying drawings is not intended to limit the scope of the present disclosure as claimed, but merely to illustrate selected embodiments of the present disclosure. All other embodiments obtained by those of ordinary skill in the art without inventive effort based on the embodiments of the present disclosure shall fall within the scope of protection of the present disclosure.

It should be noted that similar reference numerals and letters indicate similar items in the following drawings; thus, once an item is defined in one drawing, it does not need to be further defined or explained in subsequent drawings.

In the description of the present disclosure, the terms "upper," "lower," "inner," "outer," and the like, which indicate orientations or positional relationships, are based on the orientations or positional relationships shown in the drawings, or on the conventional orientation or positional relationship when the utility model product is in use. These terms are used solely for the convenience of describing the present disclosure and simplifying the description, and are not intended to indicate or imply that the described device or element must have a specific orientation, or be constructed and operated in a specific orientation. Therefore, such terms should not be construed as limiting the present disclosure.

Furthermore, terms such as "first" and "second" are used only for descriptive distinction and should not be construed as indicating or implying relative importance.

It should be noted that, without conflict, features in the embodiments of the present disclosure may be combined with each other.

As disclosed in the background art section, existing airbag devices do not control the deployment sequence of the airbag, which may cause the airbag to impact the occupant, windshield, etc., during deployment, thus failing to ensure the protective performance of the airbag. The embodiments of the present disclosure provide an airbag device to at least solve this technical problem.

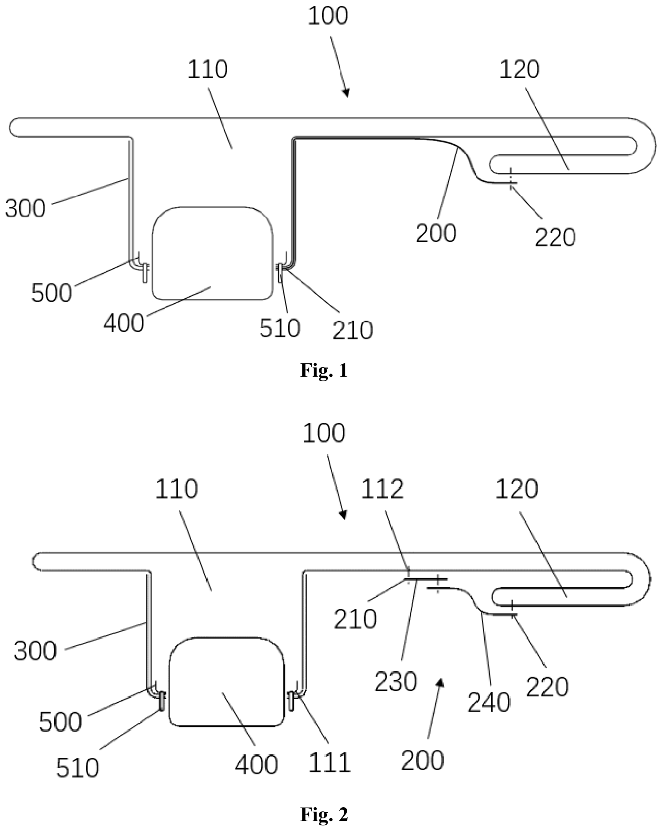

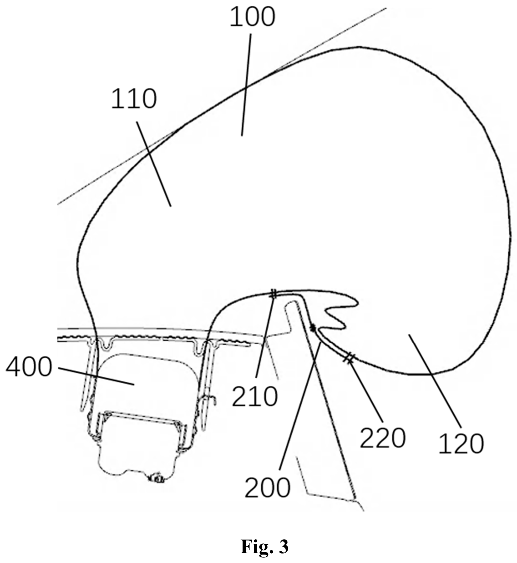

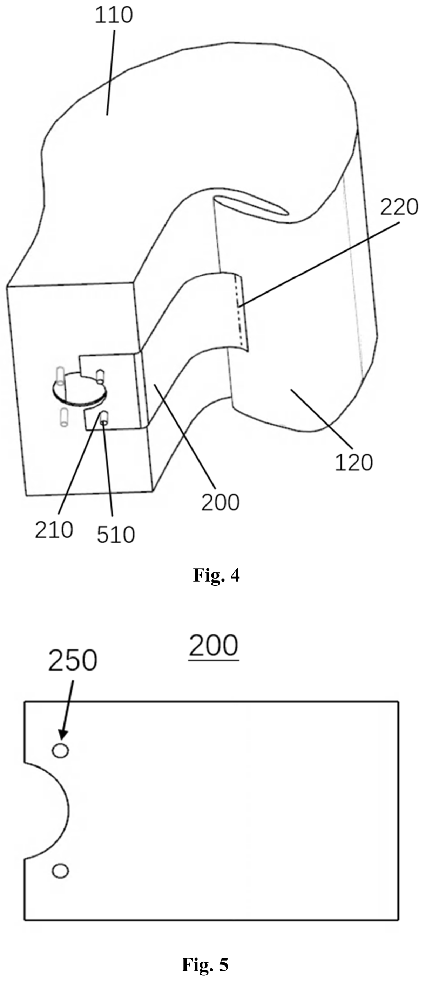

Referring to Figures 1 to 5, the airbag device provided by the embodiments of the present disclosure comprises an airbag 100 and a restraining member 200 connected to the airbag 100. During the inflation process, the airbag 100 has an initial state, an intermediate state, and a deployed state. The restraining member 200 is configured to restrain at least a portion of the airbag 100 during the transition of the airbag 100 from the initial state to the intermediate state, and to release the restraint on the airbag 100 during the transition of the airbag 100 from the intermediate state to the deployed state, thereby allowing the restrained portion of the airbag 100 to deploy.

It should be noted that the airbag 100 is in the initial state before inflation and in the deployed state upon completion of inflation, with the intermediate state lying between the initial state and the deployed state. When the airbag 100 is between the initial state to the intermediate state, the restraint 200 is capable of constraining at least a portion of the airbag 100, such that said portion of the airbag 100 cannot deploy normally, whereas during the transition of the airbag 100 from the intermediate state to the deployed state, due to the expansion of the airbag 100, the restraint 200 releases the constraint on the airbag 100, thereby enabling the portion of the airbag 100 constrained by the restraint 200 to deploy normally.

When the airbag 100 is between the initial state and the intermediate state, at least a portion of the airbag 100 is restrained by the restraining member 200 and temporarily cannot deploy. If the restrained portion of the airbag 100 deploys toward the occupant or the windshield 600, then the occupant or the windshield 600 is less likely to suffer impact, while the remaining portion of the airbag 100 deploys normally. When the restraining member 200 releases the restraint on the airbag 100, the airbag 100 fully deploys from the intermediate state to the deployed state. By providing the restraining member 200, the deployment sequence of the airbag 100 is controlled, improving the consistency of the deployment posture of the airbag 100, reducing the impact during the deployment process of the airbag 100, and thereby being able to enhance the protective performance of the airbag 100.

In some embodiments, the restraining member 200 is provided with a connecting end connected to the airbag 100, and the connecting end is capable of disconnecting from the airbag 100 during the transition of the airbag 100 from the intermediate state to the deployed state, thereby releasing the restraint on the airbag 100.

The restraining member 200 is connected to the airbag 100 via the connecting end, applying a certain restraining force to the airbag 100. During the transition of the airbag 100 from the initial state to the intermediate state, at least a portion of the airbag 100 is restrained, such that said portion of the airbag 100 cannot deploy normally, whereas during the transition of the airbag 100 from the intermediate state to the deployed state, the connecting end disconnects from the airbag 100, ceasing to apply the restraining force to the airbag 100, thereby releasing the restraint on the airbag 100.

In some optional embodiments, the connecting end comprises a first connecting end 210 and a second connecting end 220, the first connecting end 210 and the second connecting end 220 being respectively the two ends of the restraining member 200 in its extending direction. Both the first connecting end 210 and the second connecting end 220 are connected to the airbag 100, and at least one of the first connecting end 210 and the second connecting end 220 is capable of disconnecting from the airbag 100 during the transition of the airbag 100 from the intermediate state to the deployed state.

The restraining member 200 may optionally be long-strip-shaped. The first connection end 210 and the second connection end 220 of the restraining member 200 are respectively the two ends in its own extending direction. During the transition of the airbag 100 from the intermediate state to the deployed state, at least one of the first connecting end 210 and the second connecting end 220 disconnects from the airbag 100, thereby releasing the restraint on the airbag 100, and at this point the restrained portion of the airbag 100 can deploy normally.

The airbag device further comprises a housing 300, wherein the housing 300 is fixed inside the instrument panel of the vehicle via a mounting bracket. Part of the airbag 100 is arranged inside the housing 300, and a dust cover is provided on the top of the housing 300, with an opening formed on the dust cover for the airbag 100 to extend through.

In some embodiments, the airbag 100 comprises a main body portion 110 and a folded portion 120 connected to each other. The folded portion 120 is folded relative to the main body portion 110 when the airbag 100 is in the initial state. The first connecting end 210 and the second connecting end 220 are respectively connected to the main body portion 110 and the folded portion 120. The first connecting end 210 is capable of disconnecting from the main body portion 110 during the transition of the airbag 100 from the intermediate state to the deployed state, and/or the second connecting end 220 is capable of disconnecting from the folded portion 120 during the transition of the airbag 100 from the intermediate state to the deployed state.

Part of the main body portion 110 is arranged inside the housing 300, and another part of the main body portion 110 extends outwardly beyond the housing 300. The folded portion 120 is located outside the housing 300, and the folded portion 120 is folded toward the bottom of the housing 300 relative to the main body portion 110. The main body portion 110 and the folded portion 120 may be integrally formed or joined together as a single unit.

During the transition of the airbag 100 from the initial state to the intermediate state, the portion of the airbag 100 located between the first connecting end 210 and the second connecting end 220 is restrained by the restraining member 200 and temporarily cannot deploy. Since this portion of the airbag 100 primarily deploys toward the occupant, the occupant is less likely to suffer impact. Meanwhile, the remaining portion of the airbag 100 deploys normally. When the airbag 100 expands to the point where at least one of the first connecting end 210 and the second connecting end 220 disconnects from the airbag 100, the restraining member 200 releases the restraint on the airbag 100, allowing the airbag 100 to fully deploy from the intermediate state to the deployed state. By providing the restraining member 200, the deployment sequence of the airbag 100 is controlled, the impact on the occupant during the deployment process is reduced, and thus the protective performance of the airbag 100 is enhanced.

In other embodiments, the first connecting end 210 may also be connected to components other than the airbag 100. For example, the first connecting end 210 may be connected to the housing 300, or the first connecting end 210 may be connected to components external to the airbag device.

Further, the airbag device further comprises a gas generator 400, wherein the gas generator 400 is arranged on the main body portion 110. When the airbag 100 is in the initial state, a portion of the airbag 100 is rolled toward the side facing the gas generator 400 to form a folded portion 120.

A first connection position 111 and a second connection position 112 are provided on the main body portion 110, the first connection position 111 being closer to the gas generator 400 than the second connection position 112. The first connecting end 210 is connected to the first connection position 111 or the second connection position 112.

It should be noted that the first connection position 111 is located at the bottom of the main body portion 110 and adjacent to the side of the folded portion 120. The second connection position 112 is located at a certain distance away from the gas generator 400 compared to the first connection position 111. The first connecting end 210 may be connected to either the first connection position 111 or the second connection position 112 according to actual requirements.

It should be noted that the first connection position 111 and the second connection position 112 are respectively two linear regions on the airbag 100 along the length direction of the housing 300. The first connecting end 210 may be connected to any position on this linear region. Similarly, the position where the second connecting end 220 is connected to the folded portion 120 is also a linear region along the length direction of the housing 300, wherein the second connecting end 220 may be connected to any position on this linear region.

In some embodiments, a retaining ring 500 is arranged inside the main body portion 110, the gas generator 400 being fixed to the retaining ring 500. A stud 510 is provided on the retaining ring 500, wherein a portion of the stud 510 extends outward beyond the main body portion 110. The first connection end 210 is hooked onto the stud 510, wherein the first connection position 111 is the location where the stud 510 is situated.

The retainer ring 500 is located inside the main body portion 110. The stud 510 on the retainer ring 500 partially passes through the bottom of the main body portion 110 and the housing 300, extending outward beyond the housing 300. The first connection end 210 is provided with a hanging hole 250, wherein the first connection end 210 is hooked onto the stud 510 via the hanging hole 250. During the transition of airbag 100 from the intermediate state to the deployed state, the first connection end 210 is capable of detaching from the stud 510, thereby disconnecting from the main body portion 110.

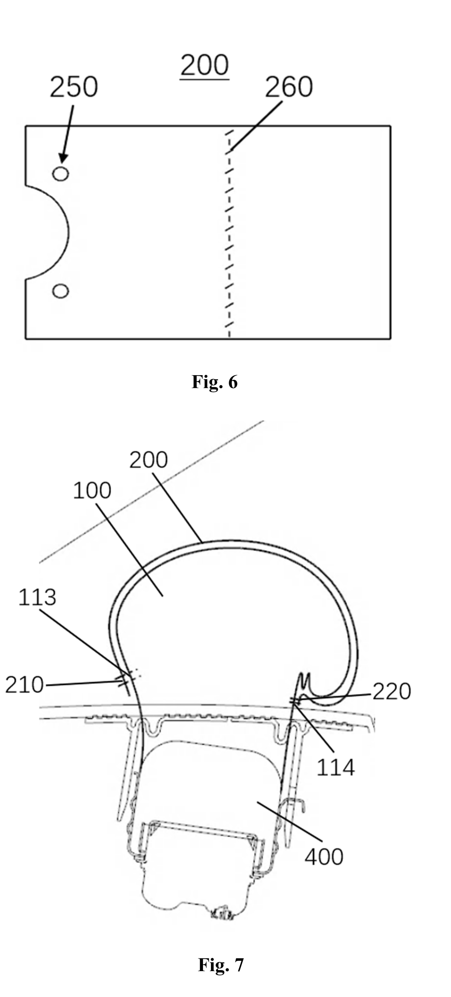

In some embodiments, referring to Figure 6, a weakened structure 260 is provide on the restraining member 200. During the transition of the airbag 100 from the intermediate state to the deployed state, the restraining member 200 is capable of breaking at the weakened structure 260 to release the restraint on the airbag 100.

The weakened structure 260 may be arranged at the middle portion of the restraining member 200. The restraining member 200 is more likely to break at the weakened structure 260 than at other portions of the restraining member 200 during the expansion of the airbag 100, thereby releasing the restraint on the airbag 100.

It should be pointed out that, when the weakened structure 260 is provided on the restraining member 200, the connecting end on the restraining member 200 may be stably connected to the airbag 100 without being designed to disconnect from the airbag 100. Of course, in other optional embodiments, the restraining member 200 may both break at the weakened structure 260 and have its connecting end disconnect from the airbag 100, thereby releasing the restraint on the airbag 100 in multiple ways.

In some optional embodiments, a plurality of through holes spaced apart are formed on the restraining member 200 to form the weakened structure 260; or, a portion of the restraining member 200 is thinned to form the weakened structure 260.

By forming a plurality of through holes spaced apart on the restraining member 200, the portion of the restraining member 200 provided with the plurality of through holes forms the weakened structure 260. Alternatively, a portion of the restraining member 200 is thinned to form the weakened structure 260, wherein the thickness of the restraining member 200 at the weakened structure 260 is less than that of other portions of the restraining member 200.

It should be understood that the weakened structure 260 is not limited to being formed by providing multiple through holes on the restraining member 200 or by thinning a portion of the restraining member 200; any configuration is acceptable as long as the restraining member 200 can break at the weakened structure 260 to release the restraint on the airbag 100.

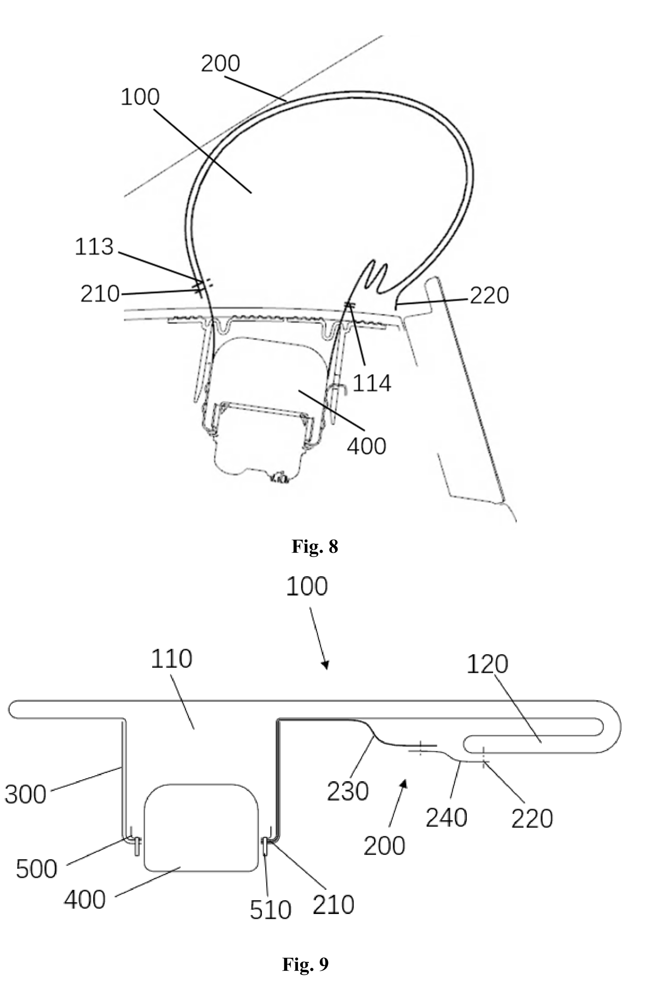

In some embodiments, referring to Figures 7 and 8, both the first connecting end 210 and the second connecting end 220 are connected to the main body portion 110, wherein both the first connecting end 210 and the second connecting end 220 are capable of disconnecting from the main body portion 110 during the transition of the airbag 100 from the intermediate state to the deployed state.

In an optional embodiment, the restraining member 200 wraps around the folded portion 120 and part of the main body portion 110, and wherein during the transition of the airbag 100 from the initial state to the intermediate state, the portion of the airbag 100 located between the first connecting end 210 and the second connecting end 220 is restrained by the restraining member 200 and temporarily cannot deploy. Since this portion of the airbag 100 primarily deploys toward the windshield 600, the windshield 600 is less likely to suffer impact. Meanwhile, the remaining portion of the airbag 100 deploys normally. When the airbag 100 expands to the point where at least one of the first connecting end 210 and the second connecting end 220 disconnects from the airbag 100, the restraining member 200 releases the restraint on the airbag 100, allowing the airbag 100 to fully deploy from the intermediate state to the deployed state. By providing the restraining member 200, the deployment sequence of the airbag 100 is controlled, the impact on the windshield 600 during the deployment process is reduced, and thus the protective performance of the airbag 100 is enhanced.

Further, a third connection position 113 and a fourth connection position 114 are provided on the main body portion 110, the third connection position 113 and the fourth connection position 114 being located on opposite sides of the gas generator 400. The first connecting end 210 and the second connecting end 220 are respectively connected to the third connection position 113 and the fourth connection position 114.

The third connection position 113 and the fourth connection position 114 are located on the main body portion 110, wherein the third connection position 113 and the fourth connection position 114 are both close to the gas generator 400 and situated on opposite sides of the gas generator 400 along the width direction of the housing 300. During the transition of the airbag 100 from the initial state to the intermediate state, the portion of the airbag 100 located between the third connection position 113 and the fourth connection position 114 on the main body portion 110 is restrained by the restraining member 200 and temporarily cannot deploy normally, thereby serving to protect the windshield 600.

In some optional embodiments, the restraining member 200 is made of fabric or rope. The connecting end of the restraining member 200 may be fixed to the airbag 100 by sewing, adhesive bonding, hooking, or laser welding, as long as the connection between the connecting end of the restraining member 200 and the airbag 100 can be disconnected.

In some embodiments, the restraining member comprises a plurality of restraining segments connected sequentially. The ends of the two restraining segments located at the two sides are respectively the first connecting end 210 and the second connecting end 220. During the transition of the airbag from the intermediate state to the deployed state, at least one of the first connecting end 210 and the second connecting end 220 is capable of disconnecting from the airbag 100, and two adjacent restraining segments are capable of disconnecting from each other.

It should be noted that the connection positions between the restraining segments may be at the ends or the middle portions of the restraining segments. The number of restraining segments may be determined according to actual requirements. The restraining segments may be made of fabric or rope, and may be fixed to each other by sewing, adhesive bonding, hooking, or laser welding, as long as the connection between the restraining segments can be disconnected.

In an optional embodiment, referring to Figure 9, the restraining member 200 comprises a first restraining segment 230 and a second restraining segment 240. One end of the first restraining segment 230 is connected to one end of the second restraining segment 240. The first connecting end 210 is the end of the first restraining segment 230 remote from the second restraining segment 240, and the second connecting end 220 is the end of the second restraining segment 240 remote from the first restraining segment 230.

In an optional embodiment, the end of the first restraining segment 230 remote from the second restraining segment 240 is connected to the first connection position 111, wherein the end of the second restraining segment 240 remote from the first restraining segment 230 is connected to the folded portion 120. At this point, the first restraining segment 230 and the second restraining segment 240 jointly restrain the airbag 100 to reduce impact on the occupant.

When a stud 510 is provided on the retaining ring 500, the end of the first restraining segment 230 remote from the second restraining segment 240 is provided with a hanging hole 250, wherein the end of the first restraining segment 230 remote from the second restraining segment 240 is hooked onto the stud 510 via the hanging hole 250. During the transition of the airbag 100 from the intermediate state to the deployed state, the end of the first restraining segment 230 remote from the second restraining segment 240 can detach from the stud 510, thereby disconnecting from the airbag 100.

In other optional embodiments, the end of the first restraining segment 230 remote from the second restraining segment 240 is connected to the second connection position 112, wherein the end of the second restraining segment 240 remote from the first restraining segment 230 is connected to the folded portion 120. At this point, the first restraining segment 230 and the second restraining segment 240 jointly restrain the airbag 100 to reduce impact on the occupant.

In other optional embodiments, the end of the first restraining segment 230 remote from the second restraining segment 240 and the end of the second restraining segment 240 remote from the first restraining segment 230 are respectively connected to the third connection position 113 and the fourth connection position 114 on the main body portion 110 located on opposite sides of the gas generator 400. At this point, the first restraining segment 230 and the second restraining segment 240 jointly restrain the airbag 100 to reduce impact on the windshield 600.

During the transition of the airbag 100 from the intermediate state to the deployed state, at least one of the end of the first restraining segment 230 remote from the second restraining segment 240 and the end of the second restraining segment 240 remote from the first restraining segment 230 disconnects from the airbag 100, and simultaneously, the first restraining segment 230 can also disconnect from the second restraining segment 240, thereby releasing the restraint on the airbag 100.

In some embodiments, the number of the restraining members 200 is plural. The first connecting end 210 and the second connecting end 220 of each restraining member 200 are connected to the main body portion 110 and the folded portion 120, respectively.

When the number of the restraining members 200 is plural, the first connecting end 210 of each restraining member 200 is connected to the first connection position 111 or the second connection position 112, wherein the second connecting end 220 of each restraining member 200 is connected to the folded portion 120.

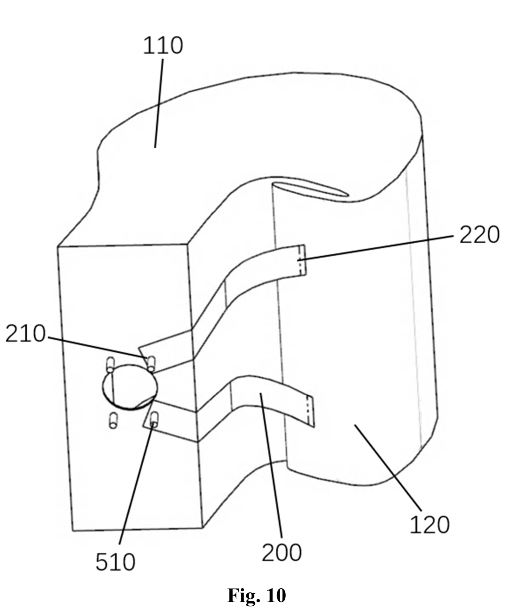

In an optional embodiment, referring to Figure 10, the number of the restraining members 200 is two. The first connecting ends 210 of both restraining members 200 are connected to the first connection position 111, wherein the second connecting ends 220 of both restraining members 200 are connected to the folded portion 120.

It should be understood that, in other optional embodiments, the first connecting end 210 of one restraining member 200 is connected to the first connection position 111 and its second connecting end 220 is connected to the folded portion 120; wherein the first connecting end 210 of the other restraining member 200 is connected to the second connection position 112 and its second connecting end 220 is connected to the folded portion 120.

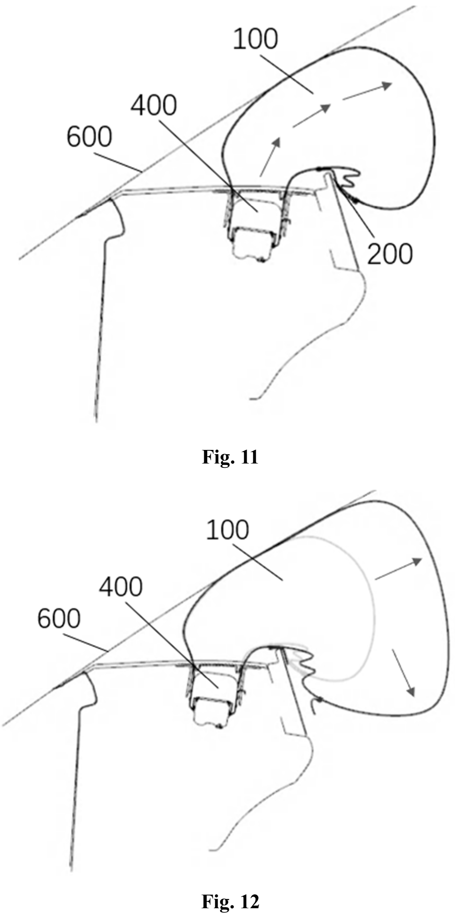

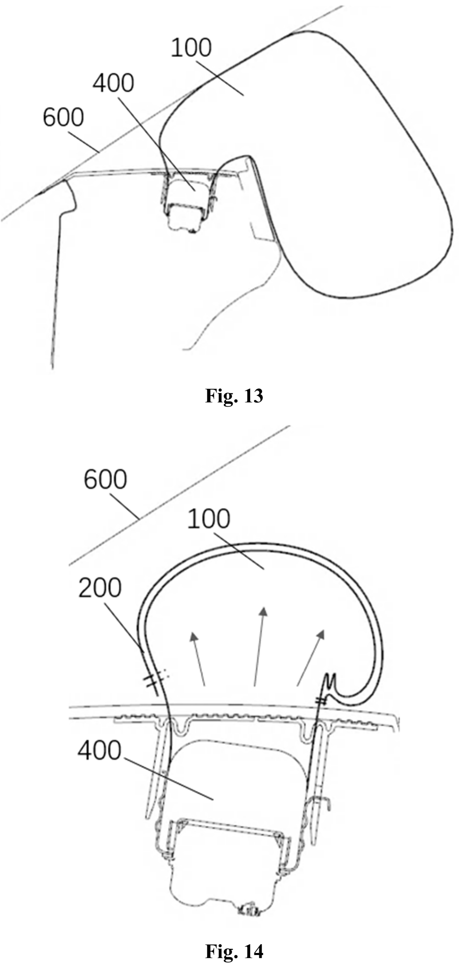

Referring to Figures 11 to 13, Figure 11 shows the state where the portion of the airbag 100 between the second connection position 112 on the main body portion 110 and the folded portion 120 is restricted by the restraining member 200. Figure 12 shows the state where the restraining member 200 releases the restriction on the airbag 100. Figure 13 shows the airbag 100 in the deployed state. Arrows in the figures indicate the gas flow direction during the deployment process of the airbag 100.

Since the portion of the airbag 100 restricted by the restraining member 200 primarily deploys toward the occupant side, during the early stage of airbag 100 deployment, the airbag 100 first deploys toward the windshield 600 side, and thus the occupant is less likely to suffer impact. As the internal pressure of the airbag 100 increases, the connecting end disconnects from the airbag 100, and the restraining member 200 releases the restraint on the airbag 100, at which point the airbag 100 can fully deploy to the deployed state.

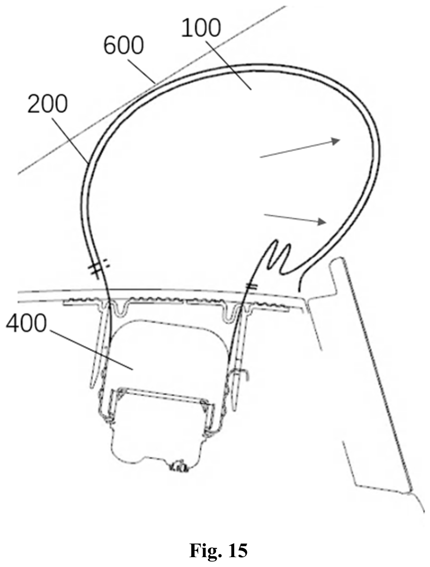

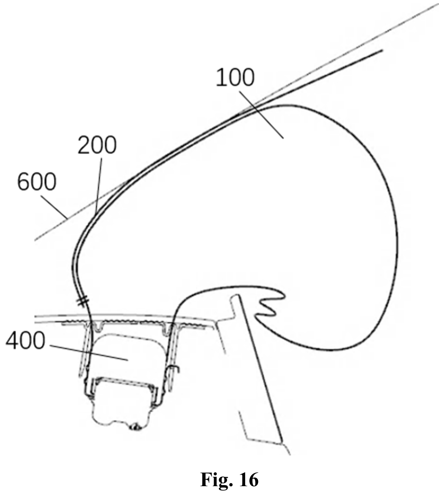

Referring to Figures 14 to 16, Figure 14 shows the state where the portion of the airbag 100 between the third connection position 113 and the fourth connection position 114 on the main body portion 110 is restrained by the restraining member 200. Figure 15 shows the state where the restraining member 200 releases the restraint on the airbag 100. Figure 16 shows the airbag 100 in the deployed state. Arrows in the figures indicate the gas flow direction during the deployment process of the airbag 100.

Since the portion of the airbag 100 restrained by the restraining member 200 primarily deploys toward the windshield 600 side, during the early stage of airbag 100 deployment, the windshield 600 is less likely to suffer impact. As the internal pressure of the airbag 100 increases, the connecting end disconnects from the airbag 100, and the restraining member 200 releases the restraint on the airbag 100, at which point the airbag 100 can fully deploy to the deployed state.

The working principle of the airbag device provided by the embodiments of the present disclosure includes at least the following: By using the restraining member 200 to restrain the portion of the airbag 100 that primarily deploys toward the occupant side, during the transition of the airbag 100 from the initial state to the deployed state, the remaining portion of the airbag 100 deploys first, and then the restraining member 200 releases the restraint on the portion of the airbag 100 that deploys toward the occupant side, allowing the portion of the airbag 100 that faces the occupant to deploy afterward, thereby defining the deployment sequence of the airbag 100 and protecting the occupant. By using the restraining member 200 to restrain the portion of the airbag 100 that primarily deploys toward the windshield 600 side, during the transition of the airbag 100 from the initial state to the deployed state, the remaining portion of the airbag 100 deploys first, and then the restraining member 200 releases the restraint on the portion of the airbag 100 that deploys toward the windshield 600 side, allowing that portion of the airbag 100 that faces the windshield 600 to deploy afterward, thereby defining the deployment sequence of the airbag 100 and protecting the windshield 600.

The beneficial effects of the airbag device provided by the embodiments of the present disclosure include at least the following: By using the restraining member 200 to restrain the deployment of the portion of the airbag 100 between the connection position on the main body portion 110 and the folded portion 120, the deployment sequence of the airbag 100 is controlled, and the impact on the occupant during the deployment process is reduced. By using the restraining member 200 to restrain the deployment of the portion of the airbag 100 between the two connection positions on the main body portion 110, the deployment sequence of the airbag 100 is controlled, and the impact on the windshield 600 during the deployment process is reduced. By using the restraining member 200 to control the deployment sequence of the airbag 100, the consistency of the deployment posture of the airbag 100 is improved, and the deployment process of the airbag 100 becomes more controllable.

In summary, the embodiments of the present disclosure provide an airbag device comprising an airbag 100 and a restraining member 200. During the transition of the airbag 100 from the initial state to the deployed state, a portion of the airbag 100 is restrained by the restraining member 200 and temporarily cannot deploy, while the remaining portion of the airbag 100 deploys normally. When at least one connecting end of the restraining member 200 disconnects from the airbag 100 or the restraining member 200 itself breaks at the weakened structure 260, the restraining member 200 releases the restraint on the airbag 100, until the airbag 100 fully deploys to the deployed state. By providing the restraining member 200, the deployment sequence of the airbag 100 is controlled, the impact during the deployment process is reduced, and thus the protective performance of the airbag 100 is enhanced.

The above description is only a specific implementation of the present disclosure, but the protection scope of the present disclosure is not limited thereto. Any variations or substitutions readily conceived by those skilled in the art within the technical scope disclosed by the present disclosure shall fall within the protection scope of the present disclosure. Therefore, the protection scope of the present disclosure shall be subject to the scope defined by the claims.

## Claims

1. An airbag device, **characterized in that** the airbag device comprises an airbag (100) and a restraining member (200) connected to the airbag (100), wherein the airbag (100) has an initial state, an intermediate state, and a deployed state during the inflation process; wherein the restraining member (200) is configured to restrain at least a portion of the airbag (100) during the transition of the airbag (100) from the initial state to the intermediate state, and to release the restraint on the airbag (100) during the transition of the airbag (100) from the intermediate state to the deployed state, thereby allowing the restrained portion of the airbag (100) to deploy.

2. The airbag device according to claim 1, **characterized in that** the restraining member (200) is provided with a connecting end connected to the airbag (100), wherein the connecting end is capable of disconnecting from the airbag (100) during the transition of the airbag (100) from the intermediate state to the deployed state, thereby releasing the restraint on the airbag (100).

3. The airbag device according to claim 2, **characterized in that** the connecting end comprises a first connecting end (210) and a second connecting end (220), the first connecting end (210) and the second connecting end (220) being respectively the two ends of the restraining member (200) in its extending direction; wherein both the first connecting end (210) and the second connecting end (220) are connected to the airbag (100), and at least one of the first connecting end (210) and the second connecting end (220) is capable of disconnecting from the airbag (100) during the transition of the airbag (100) from the intermediate state to the deployed state.

4. The airbag device according to claim 3, **characterized in that** the airbag (100) comprises a main body portion (110) and a folded portion (120) connected to each other, wherein the folded portion (120) is folded relative to the main body portion (110) when the airbag (100) is in the initial state; wherein the first connecting end (210) and the second connecting end (220) are respectively connected to the main body portion (110) and the folded portion (120);
wherein the first connecting end (210) is capable of disconnecting from the main body portion (110) during the transition of the airbag (100) from the intermediate state to the deployed state, and/or the second connecting end (220) is capable of disconnecting from the folded portion (120) during the transition of the airbag (100) from the intermediate state to the deployed state.

5. The airbag device according to claim 4, **characterized in that** the airbag device further comprises a gas generator (400), the gas generator (400) being arranged on the main body portion (110); wherein a first connection position (111) and a second connection position (112) are provided on the main body portion (110), the first connection position (111) being closer to the gas generator (400) than the second connection position (112); wherein the first connecting end (210) is connected to the first connection position (111) or the second connection position (112).

6. The airbag device according to claim 5, **characterized in that** a retaining ring (500) is arranged inside the main body portion (110), the gas generator (400) being fixed to the retaining ring (500); wherein a stud (510) is provided on the retaining ring (500), wherein part of the stud (510) extends outwardly beyond the main body portion (110); wherein the first connecting end (210) is hooked onto the stud (510), wherein the first connection position (111) is the position where the stud (510) is located.

7. The airbag device according to claim 4, **characterized in that** the number of the restraining members (200) is plural; wherein the first connecting end (210) of each restraining member (200) is connected to the main body portion (110), wherein the second connecting end (220) on each restraining member (200) is connected to the folded portion (120).

8. The airbag device according to claim 3, **characterized in that** the airbag (100) comprises a main body portion (110) and a folded portion (120), the folded portion (120) being folded relative to the main body portion (110) when the airbag (100) is in the initial state; wherein both the first connecting end (210) and the second connecting end (220) are connected to the main body portion (110);
wherein both the first connecting end (210) and the second connecting end (220) are capable of disconnecting from the main body portion (110) during the transition of the airbag (100) from the intermediate state to the deployed state.

9. The airbag device according to claim 8, **characterized in that** the airbag device further comprises a gas generator (400), the gas generator (400) being arranged on the main body portion (110); wherein a third connection position (113) and a fourth connection position (114) are provided on the main body portion (110), the third connection position (113) and the fourth connection position (114) being located on opposite sides of the gas generator (400); wherein the first connecting end (210) and the second connecting end (220) are respectively connected to the third connection position (113) and the fourth connection position (114).

10. The airbag device according to claim 3, **characterized in that** the restraining member (200) comprises a plurality of restraining segments connected sequentially; wherein the end portions of the two restraining segments at both ends are respectively the first connecting end (210) and the second connecting end (220);
wherein during the transition of the airbag (100) from the intermediate state to the deployed state, at least one of the first connecting end (210) and the second connecting end (220) is capable of disconnecting from the airbag (100), and the two adjacent restraining segments are capable of disconnecting from each other.

11. The airbag device according to any one of claims 1 to 10, **characterized in that** a weakened structure (260) is provided on the restraining member (200); wherein during the transition of the airbag (100) from the intermediate state to the deployed state, the restraining member (200) is capable of breaking at the weakened structure (260) to release the restraint on the airbag (100).

12. The airbag device according to claim 11, **characterized in that** a plurality of through holes spaced apart are formed on the restraining member (200) to form the weakened structure (260); or, a portion of the restraining member (200) is thinned to form the weakened structure (260).
